# EUROPÄISCHE PATENTSCHRIFT

(11) **EP 1 474 304 B1**
(45) Veröffentlichungstag und Bekanntmachung des Hinweises auf die Patenterteilung: **23.08.2006**
(21) Anmeldenummer: 03737245.5
(22) Anmeldetag: 03.02.2003
(51) Int. Cl.: B60K 31/00, B60T 8/00

(54) **VERFAHREN UND VORRICHTUNG ZUR REGELUNG DER GESCHWINDIGKEIT EINES FAHRZEUGS**
METHOD AND DEVICE FOR CONTROLLING THE SPEED OF A VEHICLE
PROCEDE ET DISPOSITIF DE REGULATION DE LA VITESSE D'UN VEHICULE

(30) Priorität: 07.02.2002 DE 10205023
(43) Veröffentlichungstag der Anmeldung: 10.11.2004
(73) Patentinhaber: ROBERT BOSCH GMBH, 70442 Stuttgart (DE)
(72) Erfinder: KUSTOSCH, Mario, 71665 Vaihingen/Enzen (DE)
(86) Internationale Anmeldenummer: PCT/DE2003/000294
(87) Internationale Veröffentlichungsnummer: WO 2003/066365

(56) Entgegenhaltungen:
- DE-A- 10 141 919
- DE-A- 19 924 941
- DE-A- 19 961 720
- DE-C- 4 421 116
- US-A- 5 731 977

## Beschreibung

### Stand der Technik

Die Erfindung geht von einem Verfahren und einer Vorrichtung zur Regelung der Geschwindigkeit eines Fahrzeugs nach der Gattung der unabhängigen Ansprüche aus.

Es sind bereits so genannte Fahrgeschwindigkeitsregler bekannt, mit denen die Geschwindigkeit eines Fahrzeugs auf einen vom Fahrer vorgegebenen Wert geregelt werden kann. Eine solche Fahrgeschwindigkeitsregelung umfasst mehrere Betriebsarten, unter anderem die Fahrt mit einer konstanten Geschwindigkeit, Beschleunigung und Verzögerung. In der Betriebsart Verzögern wird in Form eines fallenden Sollgeschwindigkeitsverlaufes solange eine negative Beschleunigung vorgegeben, wie der Fahrer eine entsprechende Taste an einem Bedienelement gedrückt hält. Die Istgeschwindigkeit des Fahrzeugs wird dann dieser fallenden Sollgeschwindigkeit nachgeführt. Eine negative Beschleunigung kann dabei auch durch aktiven Bremseingriff realisiert werden.

Aus der US 5,731,977 ist ein automatisches Geschwindigkeitssteuersystem für ein Fahrzeug bekannt. Das automatische Geschwindigkeitssteuersystem umfasst eine Detektionsvorrichtung zur Detektion einer Fahrzeuggeschwindigkeit des Fahrzeugs. Weiterhin ist eine Beschleunigungsvorrichtung für das Bereitstellen einer erhöhten Beschleunigung, die auf das Fahrzeug ausgeübt wird, durch ein automatisches Einstellen einer Antriebskraft, die auf die Räder ausgeübt wird, vorgesehen. Weiterhin ist eine Verzögerungsvorrichtung für das Bereitstellen einer erhöhten Verzögerung, die auf das Fahrzeug ausgeübt wird, durch ein automatisches Einstellen einer Bremskraft, die auf die Räder ausgeübt wird, vorgesehen. Weiterhin ist eine erste arithmetische Vorrichtung zur Berechnung eines Wertes eines ersten Befehlssignals, das zur Beschleunigungsvorrichtung gesandt wird, basierend auf einer Fahrzeugzielgeschwindigkeit und der Fahrzeuggeschwindigkeit, die durch die Detektionsvorrichtung detektiert wird, vorgesehen. Weiterhin ist eine zweite arithmetische Vorrichtung für das Berechnung eines Wertes eines zweiten Befehlssignals, das zur Verzögerungsvorrichtung gesandt wird, basierend auf der Fahrzeugziel geschwindigkeit und der Fahrzeuggeschwindigkeit, die durch die Detektionsvorrichtung detektiert wird, vorgesehen. Weiterhin ist eine Entscheidungsvorrichtung zur Umschaltung von einer Antriebskraftsteuerung der Beschleunigungsvorrichtung oder einer Bremskraftsteuerung der Verzögerungsvorrichtung auf eine andere Steuerung vorgesehen, sodass, während der Antriebskraftsteuerung, die Antriebskraftsteuerung fortgesetzt wird, bis der Wert des ersten Befehlssignals einen ersten vorbestimmten Schwellwert erreicht, und die Antriebskraftsteuerung umgeschaltet wird auf die Bremskraftsteuerung, wenn der erste vorbestimmte Schwellwert erreicht ist und so, dass während der Bremskraftsteuerung die Bremskraftsteuerung fortgesetzt wird, bis der Wert des zweiten Befehlssignals einen zweiten vorbestimmten Schwellwert erreicht, und die Bremskraftsteuerung auf die Antriebskraftsteuerung umgeschaltet wird, wenn der zweite vorbestimmte Schwellwert erreicht ist, im Falle eines gleichzeitigen Auftretens des ersten Befehlssignals, das einen Wert besitzt, der größer ist als der erste vorbestimmte Schwellwert, und des zweiten Befehlssignals, das einen Wert hat, der größer ist als der zweite vorbestimmte Schwellwert.

Aus der DE 199 61 720 A1 ist ein Verfahren und eine Vorrichtung zur Geschwindigkeitsregelung eines Kraftfahrzeugs bekannt. Dabei wird eine erste Sollgeschwindigkeit für einen Antriebszustand festgelegt. Eine zweite Sollgeschwindigkeit wird von einem Bremszustand festgelegt. Im Antriebszustand wird die erste Sollgeschwindigkeit auf die aktuelle Fahrzeuggeschwindigkeit und die zweite Sollgeschwindigkeit auf eine Geschwindigkeit gesetzt, welche um einen vorbestimmten Geschwindigkeitswert gegenüber der aktuellen Fahrzeuggeschwindigkeit erhöht ist. Im Bremszustand wird die zweite Sollgeschwindigkeit auf die aktuelle Fahrzeuggeschwindigkeit und die erste Sollgeschwindigkeit auf eine Geschwindigkeit gesetzt, die um einen vorbestimmten Geschwindigkeitswert gegenüber der aktuellen Fahrzeuggeschwindigkeit erniedrigt ist.

Aus der DE 199 24 941 A1 die den nächstliegenden Stand der Technik bildet, ist ein Verfahren zur Einstellung einer vorgebbaren Fahrzeug-Zielgeschwindigkeit bekannt. Um zu vermeiden, dass bei Annäherung an die Zielgeschwindigkeit ein Überschwingen stattfindet, wird eine von der Zielgeschwindigkeit abweichende Ersatzgeschwindigkeit vorgegeben, die durch Beaufschlagung der Zielgeschwindigkeit mit einem Offset gebildet wird, wobei die Ersatzgeschwindigkeit entsprechend der aktuellen Fahrzeuggeschwindigkeit oberhalb oder unterhalb der Zielgeschwindigkeit liegt. Beim Annähern der aktuellen Fahrzeuggeschwindigkeit an die Zielgeschwindigkeit wird die Ersatzgeschwindigkeit für die Geschwindigkeitsregelung herangezogen.

### Vorteile der Erfindung

Das erfindungsgemäße Verfahren und die erfindungsgemäße Vorrichtung zur Regelung der Geschwindigkeit eines Fahrzeugs mit den Merkmalen der unabhängigen Ansprüche haben demgegenüber den Vorteil, dass nach Beenden der Reduktion der Vorgabe für die Sollgeschwindigkeit geprüft wird, ob eine Istgeschwindigkeit des Fahrzeugs der Sollgeschwindigkeit durch Bremseingriff nachgeführt wird und dass in diesem Fall die Sollgeschwindigkeit ausgehend von der Istgeschwindigkeit des Fahrzeugs durch Reduktion um einen ersten vorgegebenen Wert gebildet wird. Auf diese Weise wird weitgehend verhindert, dass nach Beenden der Reduktion der Vorgabe für die Sollgeschwindigkeit der Bremseingriff abrupt beendet wird. Stattdessen ist ein kontrollierter, im wesentlichen ruckfreier Abbau der Bremsverzögerung möglich, wodurch der Fahrkomfort verbessert wird.

Durch die in den Unteransprüchen aufgeführten Maßnahmen sind vorteilhafte Weiterbildungen und Verbesserungen des im unabhängigen Verfahrensanspruch angegebenen Verfahrens möglich.

Besonders vorteilhaft ist es, dass eine erste Zielgeschwindigkeit vorgegeben wird, die ausgehend von der nach Beenden der Reduktion der Vorgabe für die Sollgeschwindigkeit vorliegenden Istgeschwindigkeit durch Reduktion um einen zweiten vorgegebenen Wert gebildet wird, und dass bei Überschreiten eines ersten vorgegebenen Schwellwertes durch die Beschleunigung des Fahrzeugs die Sollgeschwindigkeit auf die dann vorliegende Istgeschwindigkeit des Fahrzeugs oder auf die erste Zielgeschwindigkeit eingestellt wird, je nachdem, welche der beiden Geschwindigkeiten größer ist. Auf diese Weise wird durch die erste Zielgeschwindigkeit eine untere Grenze für die von der Fahrgeschwindigkeitsregelung einzustellende Geschwindigkeit festgelegt und damit eine Abweichung von der Benutzervorgabe begrenzt.

Ein weiterer Vorteil besteht darin, dass eine Bremsverzögerung reduziert wird, solange die Beschleunigung des Fahrzeugs kleiner als der erste vorgegebene Schwellwert ist, und dass erst bei Überschreiten des ersten vorgegebenen Schwellwertes durch die Beschleunigung des Fahrzeugs die Bremsverzögerung ganz abgestellt wird. Auf diese Weise wird der durch die Abschaltung der Bremsverzögerung erzeugte Ruck reduziert und bei entsprechend geeigneter Vorgabe des Schwellwertes für den Fahrer unbemerkt bleiben.

Besonders vorteilhaft ist es, wenn die Bremsverzögerung schrittweise verzögert wird. Auf diese Weise ist eine im wesentlichen ruckfreie Reduzierung der Bremsverzögerung möglich, die jedenfalls den Fahrkomfort erhöht.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild einer erfindungsgemäßen Vorrichtung zur Regelung der Geschwindigkeit eines Fahrzeugs, Figur 2 einen Ablaufplan für das erfindungsgemäße Verfahren zur Regelung der Geschwindigkeit eines Fahrzeugs, Figur 3a) ein Schaubild für den Verlauf einer Istgeschwindigkeit des Fahrzeugs bei Anwendung des erfindungsgemäßen Verfahrens und Figur 3b) ein Schaubild für den Verlauf der Beschleunigung des Fahrzeugs bei Ablauf des erfindungsgemäßen Verfahrens.

### Beschreibung des Ausführungsbeispiels

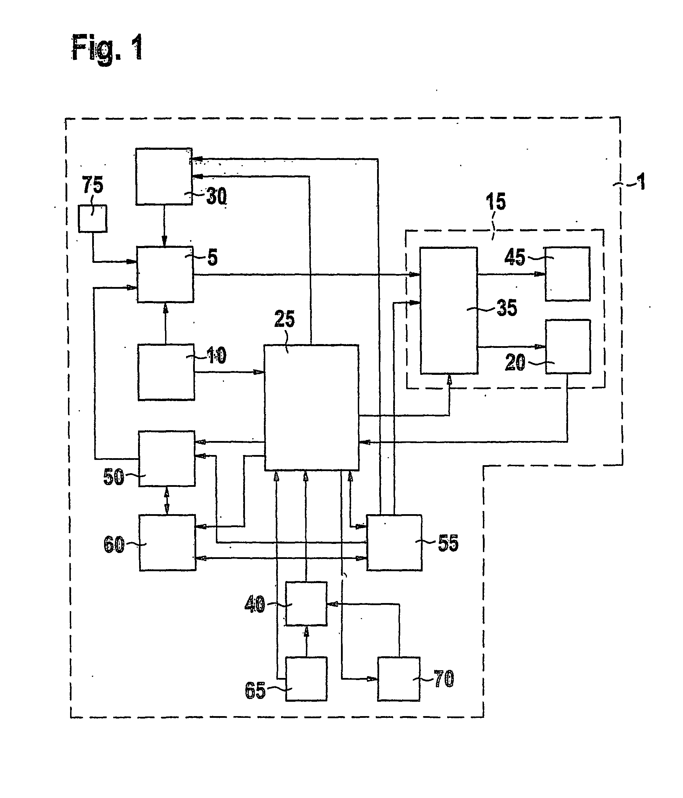

In Figur 1 kennzeichnet 1 eine Vorrichtung zur Regelung der Geschwindigkeit eines Fahrzeugs. Die Vorrichtung 1 umfaßt Mittel 5 zur Vorgabe einer Sollgeschwindigkeit des Fahrzeugs. Zu diesem Zweck können die Mittel 5 zur Vorgabe der Sollgeschwindigkeit mit einer Eingabeeinheit 75 verbunden sein. Bei der Eingabeeinheit 75 kann es sich beispielsweise um einen Wählhebel handeln, an dem der Fahrer des Fahrzeugs eine gewünschte Fahrgeschwindigkeit vorgeben kann, die von den Mitteln 5 zur Vorgabe der Sollgeschwindigkeit als Sollgeschwindigkeit interpretiert wird. Die Mittel 5 zur Vorgabe der Sollgeschwindigkeit sind außerdem mit einer Regelvorrichtung 35 verbunden, der sie die vorgegebene Sollgeschwindigkeit zuführen. Die Regelvorrichtung 35 ist außerdem mit Mitteln 55 zur Erfassung der Istgeschwindigkeit des Fahrzeugs verbunden, die der Regelvorrichtung 35 die Istgeschwindigkeit des Fahrzeugs zuführen. Zur Erfassung der Istgeschwindigkeit des Fahrzeugs können die Mittel 55 beispielsweise einen Drehzahlsensor zur Erfassung der Drehzahl der Antriebsräder des Fahrzeugs umfassen. Die Regelvorrichtung 35 führt einen Vergleich zwischen der vorgegebenen Sollgeschwindigkeit und der ermittelten Istgeschwindigkeit des Fahrzeugs durch und regelt die Differenz zwischen der vorgegebenen Sollgeschwindigkeit und der ermittelten Istgeschwindigkeit des Fahrzeugs auf ein Minimum, mit dem Ziel, die Istgeschwindigkeit der vorgegebenen Sollgeschwindigkeit möglichst gut anzunähern. Zur Minimierung der Regeldifferenz kann die Regelvorrichtung 35 zum einen Mittel 45 zur Beeinflussung der Antriebseinheit und zum andern Bremsmittel 20 ansteuern. Die Mittel 45 zur Beeinflussung der Antriebseinheit des Fahrzeugs dienen dazu, das von der Antriebseinheit abzugebende Moment in Abhängigkeit der durch die Mittel 5 vorgegebenen Sollgeschwindigkeit zu erhöhen oder zu reduzieren. Für den Fall, dass es sich bei der Antriebseinheit um einen Verbrennungsmotor handelt, kann dies durch entsprechende Einstellung des Zündzeitpunktes, durch entsprechende Bemessung der Kraftstoffzufuhr und/oder durch entsprechende Bemessung der Luftzufuhr in den Brennraum erfolgen. Die durch die Mittel 45 erreichbare größtmögliche Verzögerung kann dabei durch Abschaltung der Verbrennung erreicht werden. Durch die Bremsmittel 20 ist zusätzlich eine Verzögerung durch Betätigung der Bremse des Fahrzeugs möglich. Die Regelvorrichtung 35, die Bremsmittel 20 und die Mittel 45 zur Beeinflussung der Antriebseinheit bilden Mittel 15 zur Nachführung der Istgeschwindigkeit an die vorgegebene Sollgeschwindigkeit des Fahrzeugs. Es sind weiterhin Steuermittel 25 vorgesehen, die mit der Regelvorrichtung 35, den Bremsmitteln 20 und den Mitteln 55 zur Erfassung der Istgeschwindigkeit verbunden sind. Die Vorrichtung 1 umfaßt ferner Mittel 10 zur Reduzierung der Vorgabe der Sollgeschwindigkeit des Fahrzeugs. Die Mittel 10 sind einerseits mit den Mitteln 5 und andererseits mit den Steuermitteln 25 verbunden. Sie können ebenfalls als Bedienelement, beispielsweise als Taste am Wählhebel 75, ausgebildet sein. Solange der Fahrer diese Taste 10 betätigt, wird die Vorgabe für die Sollgeschwindigkeit reduziert. Ferner umfaßt die Vorrichtung 1 Mittel 30 zur Reduzierung der Sollgeschwindigkeit, die mit den Steuermitteln 25, den Mitteln 55 zur Erfassung der Istgeschwindigkeit und den Mitteln 5 zur Vorgabe der Sollgeschwindigkeit verbunden sind. Die Mittel 30 zur Reduzierung der Sollgeschwindigkeit des Fahrzeugs dienen dazu, in Abhängigkeit der Ansteuerung durch die Steuermittel 25 eine Vorgabe für die Sollgeschwindigkeit, ausgehend von der ermittelten Istgeschwindigkeit, abzüglich eines ersten vorgegebenen Wertes zu bilden. Die Vorrichtung 1 umfaßt ferner Mittel 50 zur Auswahl einer vorzugebenden SollGeschwindigkeit des Fahrzeugs, wobei die Mittel 50 einerseits mit den Mitteln 5 zur Vorgabe der Sollgeschwindigkeit und andererseits mit den Steuermitteln 25 und den Mitteln 55 zur Erfassung der Istgeschwindigkeit verbunden sind. Ferner sind Mittel 60 zur Speicherung einer Zielgeschwindigkeit vorgesehen, die einerseits mit den Mitteln 50 und andererseits mit den Mitteln 55 verbunden sind. Die Mittel 55 zur Erfassung der Istgeschwindigkeit des Fahrzeugs sind außerdem mit den Steuermitteln 25 verbunden. In Abhängigkeit eines Steuersignals der Steuermittel 25 werden die Mittel 55 veranlaßt, die aktuell ermittelte Istgeschwindigkeit des Fahrzeugs an die Mittel 60 zur Speicherung der Zielgeschwindigkeit abzugeben, wo diese Istgeschwindigkeit dann als Zielgeschwindigkeit abgespeichert wird. Veranlaßt durch die Steuermittel 25 wählen die Mittel 50 die in den Mitteln 60 gespeicherte oder die von den Mitteln 55 erfaßte Istgeschwindigkeit des Fahrzeugs für die Vorgabe der Sollgeschwindigkeit aus.

Die Vorrichtung 1 umfaßt weiterhin Mittel 65 zur Erfassung der Beschleunigung des Fahrzeugs, die einerseits mit den Steuermitteln 25 und andererseits mit Vergleichsmitteln 40 verbunden sind. Weiterhin sind Mittel 70 zur Speicherung eines ersten und gegebenenfalls zweiten Schwellwertes für die Beschleunigung des Fahrzeugs vorgesehen, die einerseits mit den Steuermitteln 25 und andererseits mit den Vergleichsmitteln 40 verbunden sind. Die in den Mitteln 70 zu speichernden Schwellwerte werden dabei von den Steuermitteln 25 vorgegeben. Die Vergleichsmittel 40 sind außerdem mit den Steuermitteln 25 verbunden und vergleichen die durch die Mittel 65 erfaßte aktuelle Beschleunigung des Fahrzeugs mit einem der in den Mitteln 70 gespeicherten Schwellwerte.

Bei Verwendung der Bremsmittel 20 gemäß dem Ausführungsbeispiel nach Figur 1 wird eine von den Mitteln 10 zur Reduktion der Vorgabe für die Sollgeschwindigkeit geforderte negative Beschleunigung, beispielsweise an ein in Figur 1 nicht dargestelltes Bremsensteuergerät übergeben. Ein Beschleunigungsregelkreis im Bremsensteuergerät realisiert dann die geforderte negative Beschleunigung des Fahrzeugs durch Variationen des Bremsdrucks.

Sobald der Fahrer durch Loslassen der Taste am Wählhebel 75 die Betriebsart Verzögern beendet und die Mittel 10 somit keine Reduktion der Vorgabe der Sollgeschwindigkeit mehr fordern, soll die Regelung der Fahrgeschwindigkeit mit der aktuell erreichten Istgeschwindigkeit des Fahrzeugs als neuer Sollgeschwindigkeit in die Betriebsart der Fahrt mit konstanter Geschwindigkeit wechseln. Dabei entsteht ein Konflikt zwischen dem Fahrkomfort und der Regelgüte im Zeitpunkt der Umschaltung zwischen den beiden Betriebsarten. Zum einen soll die Istgeschwindigkeit des Fahrzeugs als neue Sollgeschwindigkeit möglichst genau eingehalten werden und zum andern verursacht eine sprunghafte Änderung der Beschleunigung, beispielsweise durch abrupte Beendigung des Bremseingriffs einen unangenehmen Ruck. Im Falle einer Verzögerung durch einen aktiven Bremseingriff mittels der Bremsmittel 20 muß somit gegebenenfalls zusätzlich zur Regelung des von der Antriebseinheit abzugebenden Moments durch die Mittel 45 die Bremsverzögerung als weitere Größe koordiniert werden.

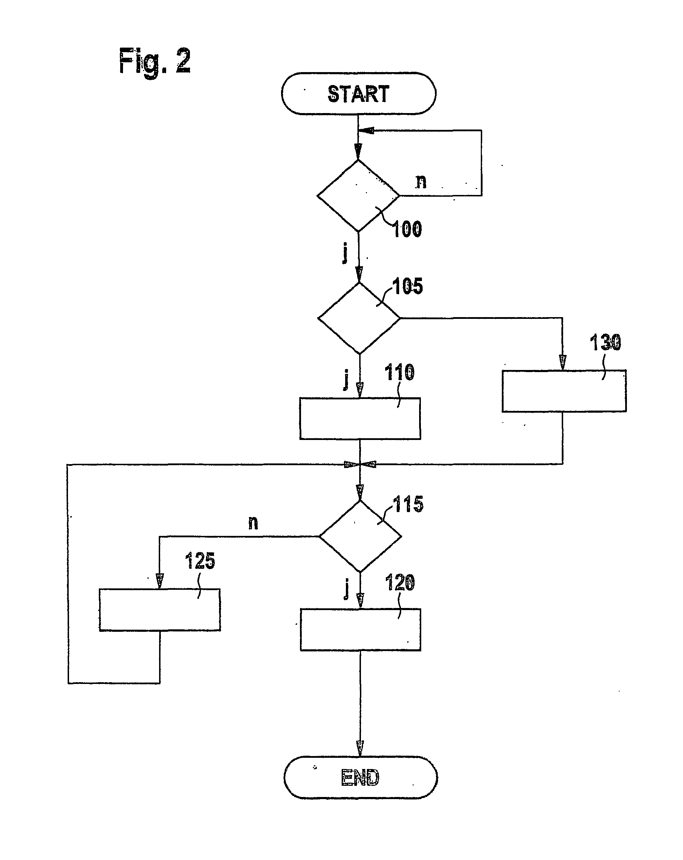

Anhand von Figur 2 wird nun mit Hilfe eines Ablaufplans der Ablauf des erfindungsgemäßen Verfahrens näher erläutert. Nach einem Programmstart prüfen die Steuermittel 25 anhand des von den Mitteln 10 gelieferten Eingangssignals, ob die Betriebsart Verzögern vom Fahrer eingestellt und beendet wurde, d.h. ob eine Reduktion der Vorgabe für die Sollgeschwindigkeit des Fahrzeugs durch die Mittel 10 beendet wurde. Ist dies der Fall, so wird zu einem Programmpunkt 105 verzweigt, andernfalls wird zu Programmpunkt 100 zurück verzweigt. Bei Programmpunkt 105 prüfen die Steuermittel 25 anhand des von den Bremsmitteln 20 gelieferten Eingangssignals, ob ein aktiver Bremseingriff durch die Bremsmittel 20 zur Reduktion der Istgeschwindigkeit des Fahrzeugs vorliegt. Ist dies der Fall, so wird zu einem Programmpunkt 110 verzweigt, andernfalls wird zu einem Programmpunkt 130 verzweigt.

Sobald die Beendigung der Reduktion der Vorgabe für die Sollgeschwindigkeit von den Steuermitteln 25 detektiert wurde, veranlassen die Steuermittel 25 bei Programmpunkt 110 die Mittel 30 zur Bildung einer neuen, über die Mittel 5 vorzugebenden Sollgeschwindigkeit. Diese wird, ausgehend von der durch die Mittel 55 erfaßten Istgeschwindigkeit durch Reduktion um einen ersten vorgegebenen Wert gebildet. Bei dem ersten vorgegebenen Wert kann es sich um einen applizierbaren Differenzbetrag handeln, der mittels eines Kennfeldes in Abhängigkeit von der aktuellen Istgeschwindigkeit und den Parametern der Antriebseinheit ermittelt und in einem in Figur 1 nicht dargestellten und den Steuermitteln 25 zugeordneten Speicher abgelegt sein kann. Weiterhin kann es bei Programmpunkt 110 vorgesehen sein, dass sobald die Steuermittel 25 die Beendigung der Reduktion der Vorgabe für die Sollgeschwindigkeit detektiert haben, die Steuermittel 25, ausgehend von der gerade durch die Mittel 55 ermittelten aktuellen Istgeschwindigkeit des Fahrzeugs, eine erste Zielgeschwindigkeit bilden und zwar ausgehend von der Istgeschwindigkeit durch Reduktion um einen zweiten vorgegebenen Wert. Die Steuermittel 25 veranlassen dann die Speicherung dieser Zielgeschwindigkeit in den Mitteln 60, wozu die Steuermittel 25 zusätzlich mit den Mitteln 60 verbunden sind. Dabei können der erste vorgegebene Wert und der zweite vorgegebene Wert optional gleich groß gewählt werden. Auch bei dem zweiten vorgegebenen Wert handelt es sich um einen applizierbaren Differenzbetrag, der mittels eines Kennfeldes in Abhängigkeit der aktuellen Istgeschwindigkeit und der Parameter der Antriebseinheit vorgegeben sein kann. Anschließend wird zu einem Programmpunkt 115 verzweigt. Bei Programmpunkt 130 wurde zuvor von den Steuermitteln 25 kein aktiver Bremseingriff durch die Bremsmittel 20 detektiert. Vielmehr findet in diesem Fall die Verzögerung nur durch entsprechende Regelung des von der Antriebseinheit abzugebenden Moments statt. In diesem Fall veranlassen die Steuermittel 25, sobald die Beendigung der Reduktion der Vorgabe für die Sollgeschwindigkeit detektiert wurde, die Mittel 30 dazu, über die Mittel 5 eine neue Sollgeschwindigkeit vorzugeben, die der aktuell von den Mitteln 55 ermittelten Istgeschwindigkeit des Fahrzeugs entspricht. Ferner kann es bei Programmpunkt 130 vorgesehen sein, dass die Steuermittel 25, sobald die Beendigung der Reduktion der Vorgabe für die Sollgeschwindigkeit detektiert wurde, die Mittel 60 zur Speicherung einer zweiten Zielgeschwindigkeit veranlassen, die aus der aktuell von den Mitteln 55 ermittelten Istgeschwindigkeit abzüglich eines dritten vorgegebenen Wertes durch die Steuermittel 25 gebildet wird. Dabei kann wiederum der dritte vorgegebene Wert mit dem ersten und/oder dem zweiten vorgegebenen Wert übereinstimmen und in der beschriebenen Weise einen applizierbaren Differenzbetrag bilden, der mittels eines Kennfeldes in Abhängigkeit der aktuellen Istgeschwindigkeit und der Parameter der Antriebseinheit vorgegeben ist. Anschließend wird von Programmpunkt 130 ebenfalls zu Programmpunkt 115 verzweigt. Bei Programmpunkt 115 prüfen die Steuermittel 25, ob die von den Mitteln 65 ermittelte gerade aktuelle Beschleunigung des Fahrzeugs größer als ein vorgegebener Schwellwert ist. Ist dies der Fall, so wird zu einem Programmpunkt 120 verzweigt, andernfalls wird zu einem Programmpunkt 125 verzweigt. Der vorgegebene Schwellwert kann dabei als ein vorgegebener Bruchteil derjenigen von den Mitteln 65 ermittelten Beschleunigung des Fahrzeugs gebildet sein, die zum Zeitpunkt der Detektion der Beendigung der Reduktion der Vorgabe für die Sollgeschwindigkeit aktuell war. Diese Beschleunigung kann dabei von den Steuermitteln 25 in einem in Figur 1 nicht dargestellten Speicher abgelegt worden sein, sobald die Steuermittel 25 die Beendigung der Reduktion der Vorgabe für die Sollgeschwindigkeit detektiert haben. Die Steuermittel 25 bilden dann auch den vorgegebenen Schwellwert, beispielsweise aus dieser gespeicherten Beschleunigung und legen ihn in den Mitteln 70 ab. Alternativ könnte bei Programmpunkt 115 ein erster vorgegebener Schwellwert verwendet werden, wenn von Programmpunkt 110 zu Programmpunkt 115 verzweigt wurde, und ein zweiter vorgegebener Schwellwert verwendet werden, wenn von Programmpunkt 130 zu Programmpunkt 115 verzweigt wurde, wobei der erste vorgegebene Schwellwert und der zweite vorgegebene Schwellwert unterschiedlich oder in gleicher Größe vorgegeben werden können. Die Vorgabe des oder der Schwellwerte bzw. des Bruchteils aus der bei Detektion der Beendigung der Reduktion der Vorgabe für die Sollgeschwindigkeit ermittelten Beschleunigung des Fahrzeugs kann wiederum in Abhängigkeit von Eigenschaften und Parametern der Antriebseinheit vorgegeben sein, so dass es sich um applizierbare Schwellwerte handelt.

Bei Programmpunkt 125 veranlassen die Steuermittel 25 die Regelvorrichtung 35 zur Reduzierung der von den Bremsmitteln 20 eingestellten Bremsverzögerung um eine vorgegebene Schrittweite. Die vorgegebene Schrittweite kann dabei ebenfalls von der gerade vorliegenden Beschleunigung und den Eigenschaften und Parametern der Antriebseinheit abhängen und über ein Kennfeld ermittelt werden, so dass es sich bei der vorgegebenen Schrittweite ebenfalls um eine applizierbare Schrittweite handelt. Nach Programmpunkt 125 wird wieder zu Programmpunkt 115 zurück verzweigt. Bei mehrfachem Durchlauf der Programmschleife mit dem Programmpunkt 125 wird die Bremsverzögerung schrittweise reduziert.

Bei Programmpunkt 120 veranlassen die Steuermittel 25 die Mittel 50 dazu, den Wert der in den Mitteln 60 gespeicherten ersten oder zweiten Zielgeschwindigkeit mit dem Wert der von den Mitteln 55 zuletzt ermittelten Istgeschwindigkeit des Fahrzeugs zu vergleichen und die größere der beiden Geschwindigkeiten zur Vorgabe der Sollgeschwindigkeit an die Mittel 5 weiterzuleiten. Diese neue Sollgeschwindigkeit entspricht dann auch der neuen Zielgeschwindigkeit und kann von den Mitteln 50 in den Mitteln 60 abgespeichert werden. Die Mittel 15 zur Nachführung werden dann im folgenden die von den Mitteln 55 ermittelte Istgeschwindigkeit des Fahrzeugs dieser neuen, von den Mitteln 5 vorgegebenen Sollgeschwindigkeit nachführen, so dass die Umschaltung von der Betriebsart Verzögern in die Betriebsart Fahrt mit konstanter Geschwindigkeit abgeschlossen wird. Anschließend wird das Programm verlassen.

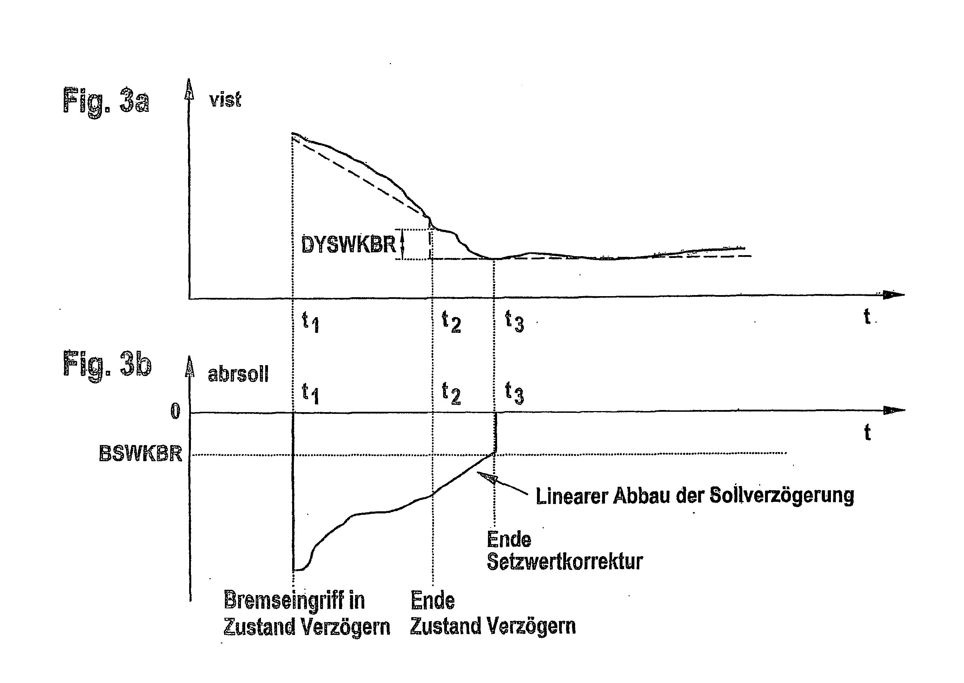

In Figur 3a) ist die Istgeschwindigkeit vist des Fahrzeugs über der Zeit t aufgetragen. In Figur 3b) ist die Sollbeschleunigung abrsoll des Fahrzeugs über der Zeit aufgetragen. Im Zuge der Regelung der Fahrgeschwindigkeit wird diese Sollbeschleunigung abrsoll durch die Mittel 45 zur Beeinflussung der Antriebseinheit und die Bremsmittel 20 für die Nachführung der Istgeschwindigkeit des Fahrzeugs an die Sollgeschwindigkeit des Fahrzeugs vorgegeben. Zu einem Zeitpunkt t₁ beginnt die Betriebsart Verzögern, d.h. der Fahrer betätigt die Taste des Wählhebels, also die Mittel 10 zur Reduzierung der Vorgabe für die Sollgeschwindigkeit des Fahrzeugs. Dies hat zur Folge, dass die Regelvorrichtung 35 die Mittel 45 zur Beeinflussung der Antriebseinheit und/oder die Bremsmittel 20 zur Realisierung einer Bremsverzögerung aktivieren, so dass sich eine negative Sollbeschleunigung abrsoll ergibt und die Istgeschwindigkeit vist abnimmt. Die durch die Mittel 5 vorgegebene Sollgeschwindigkeit ist in Figur 3a) gestrichelt dargestellt und nimmt bei Betätigung der Mittel 10 zunächst linear ab. Zu einem Zeitpunkt t₂ detektieren die Steuermittel 25 die Beendigung der Vorgabe für die Sollgeschwindigkeit des Fahrzeugs, also die Beendigung der Betätigung der Taste des Wählhebels und damit der Mittel 10 durch den Fahrer. Im Beispiel der Figur 3a) und der Figur 3b) detektieren die Steuermittel 25 dabei, dass die Bremsverzögerung unter Verwendung der Bremsmittel 20 realisiert wurde. Deshalb wird gemäß Figur 2 zum Programmpunkt 110 verzweigt und die Sollgeschwindigkeit zum Zeitpunkt t₂ um den ersten vorgegebenen Wert DVSWKBR reduziert. Dies führt gemäß Figur 3b) zu einem schrittweisen Abbau der Bremsverzögerung beim Durchlaufen des Programmpunkts 125, solange die Sollbeschleunigung abrsoll, die in diesem Ausführungsbeispiel vereinfachend der ermittelten Beschleunigung des Fahrzeugs entsprechen soll, kleiner als der vorgegebene Schwellwert BSWKBR ist. Der schrittweise Abbau der Bremsverzögerung führt dabei im Mittel zu einem linearen Anstieg der Sollbeschleunigung abrsoll, wie in Figur 3b) erkennbar ist. Zum Zeitpunkt t₃ erreicht die Sollbeschleunigung abrsoll den vorgegebenen Schwellwert BSWKBR. Die Sollgeschwindigkeit wird dann bei Programmpunkt 120 auf das Maximum aus der aktuellen Istgeschwindigkeit vist und der bei Programmpunkt 110 ermittelten Zielgeschwindigkeit gesetzt und die Istgeschwindigkeit vist wird vom Zeitpunkt t₃ an dieser neuen Sollgeschwindigkeit nachgeführt. Dem entspricht ein abrupter Abbau der Bremsverzögerung zum Zeitpunkt t₃ vom vorgegebenen Schwellwert BSWKBR auf Null. Bei geeigneter Wahl des vorgegebenen Schwellwerts BSWKBR führt diese abrupte Beendigung der Bremsverzögerung nicht zu einem für den Fahrer spürbaren Ruck. Vom Zeitpunkt t₃ an herrscht dann die Betriebsart mit konstanter Vorgabe für die Fahrgeschwindigkeit.

## Patentansprüche

1. Verfahren zur Regelung der Geschwindigkeit eines Fahrzeugs, bei dem eine Vorgabe für eine Sollgeschwindigkeit reduziert wird und bei dem eine Istgeschwindigkeit des Fahrzeugs der Sollgeschwindigkeit nachgeführt wird, **dadurch gekennzeichnet, dass** nach Beenden der Reduktion der Vorgabe für die Sollgeschwindigkeit geprüft wird, ob eine Istgeschwindigkeit des Fahrzeugs der Sollgeschwindigkeit durch Bremseingriff nachgeführt wird und dass in diesem Fall die Sollgeschwindigkeit ausgehend von der Istgeschwindigkeit des Fahrzeugs durch Reduktion um einen ersten vorgegebenen Wert gebildet wird.

2. Verfahren nach Anspruch 1, **dadurch gekennzeichnet, dass** eine erste Zielgeschwindigkeit vorgegeben wird, die ausgehend von der nach Beenden der Reduktion der Vorgabe für die Sollgeschwindigkeit vorliegenden Istgeschwindigkeit durch Reduktion um einen zweiten vorgegebenen Wert gebildet wird, und dass bei Überschreiten eines ersten vorgegebenen Schwellwertes durch die Beschleunigung des Fahrzeugs die Sollgeschwindigkeit auf die dann vorliegende Istgeschwindigkeit des Fahrzeugs oder auf die erste Zielgeschwindigkeit eingestellt wird, je nachdem, welche der beiden Geschwindigkeiten größer ist.

3. Verfahren nach Anspruch 2, **dadurch gekennzeichnet, dass** eine Bremsverzögerung reduziert wird, solange die Beschleunigung des Fahrzeugs kleiner als der erste vorgegebene Schwellwert ist, und dass erst bei Überschreiten des ersten vorgegebenen Schwellwertes durch die Beschleunigung des Fahrzeugs die Bremsverzögerung ganz abgestellt wird.

4. Verfahren nach Anspruch 3, **dadurch gekennzeichnet, dass** die Bremsverzögerung schrittweise reduziert wird.

5. Verfahren nach Anspruch 3 oder 4, **dadurch gekennzeichnet, dass** die Bremsverzögerung mit einer vorgegebenen Schrittweite abgebaut wird.

6. Verfahren nach einem der Ansprüche 2 bis 5, **dadurch gekennzeichnet, dass** der erste vorgegebene Wert und der zweite vorgegebene Wert gleich groß gewählt werden.

7. Verfahren nach einem der vorherigen Ansprüche, **dadurch gekennzeichnet, dass** in dem Fall, in dem die Istgeschwindigkeit des Fahrzeugs der Sollgeschwindigkeit nicht durch Bremseingriff nachgeführt wird, die Sollgeschwindigkeit der nach Beenden der Reduktion der Vorgabe für die Sollgeschwindigkeit vorliegenden Istgeschwindigkeit gleichgesetzt wird.

8. Verfahren nach Anspruch 7, **dadurch gekennzeichnet, dass** eine zweite Zielgeschwindigkeit vorgegeben wird, die ausgehend von der nach Beenden der Reduktion der Vorgabe für die Sollgeschwindigkeit vorliegenden Istgeschwindigkeit durch Reduktion um einen dritten vorgegebenen Wert gebildet wird, und dass bei Überschreiten eines zweiten vorgegebenen Schwellwertes durch die Beschleunigung des Fahrzeugs die Sollgeschwindigkeit auf die dann vorliegende Istgeschwindigkeit des Fahrzeugs oder auf die zweite Zielgeschwindigkeit eingestellt wird, je nachdem, welche der beiden Geschwindigkeiten größer ist.

9. Vorrichtung (1) zur Regelung der Geschwindigkeit eines Fahrzeugs, mit Mitteln (5) zur Vorgabe einer Sollgeschwindigkeit, mit Mitteln (10) zur Reduzierung der Vorgabe der Sollgeschwindigkeit, mit Mitteln (15) zur Nachführung einer Istgeschwindigkeit des Fahrzeugs im Sinne einer Angleichung an die Sollgeschwindigkeit, wobei die Mittel (15) zur Nachführung Bremsmittel (20) umfassen, **dadurch gekennzeichnet, dass** Mittel (25) vorgesehen sind, die prüfen, ob nach Beendigung der Reduzierung der Vorgabe für die Sollgeschwindigkeit für die Nachführung der Istgeschwindigkeit die Bremsmittel (20) aktiviert sind, dass Mittel (30) zur Reduktion der Sollgeschwindigkeit vorgesehen sind, die in diesem Fall die Sollgeschwindigkeit ausgehend von der Istgeschwindigkeit des Fahrzeugs durch Reduktion um einen ersten vorgegebenen Wert bilden.

## Claims

1. Method for controlling the speed of a vehicle, in which a predefined value for a setpoint speed is reduced and in which an actual speed of the vehicle is made to follow the setpoint speed, **characterized in that** after the reduction in the predefined value for the setpoint speed has ended it is checked whether an actual speed of the vehicle is made to follow the setpoint speed by braking intervention, and **in that** in this case the setpoint speed is formed on the basis of the actual speed of the vehicle by reduction by a first predefined value.

2. Method according to Claim 1, **characterized in that** a first target speed is predefined, said target speed being formed on the basis of the actual speed present after the ending of the reduction in the predefined value for the setpoint speed by reduction by a second predefined value, and **in that** when a first predefined threshold value is exceeded by the acceleration of the vehicle the setpoint speed is set to the actual speed of the vehicle which is then present or to the first target speed depending on which of the two speeds is higher.

3. Method according to Claim 2, **characterized in that** braking deceleration is reduced as long as the acceleration of the vehicle is lower than the predefined threshold value, and **in that** the braking deceleration is not shut off entirely until the first predefined threshold value is exceeded by the acceleration of the vehicle.

4. Method according to Claim 3, **characterized in that** the braking deceleration is reduced incrementally.

5. Method according to Claim 3 or 4, **characterized in that** the braking deceleration is reduced with a predefined increment.

6. Method according to one of Claims 2 to 5, **characterized in that** the first predefined value and the second predefined value are selected to be of equal magnitude.

7. Method according to one of the preceding claims, **characterized in that** if the actual speed of the vehicle is not made to follow the setpoint speed by braking intervention, the setpoint speed is made equivalent to the actual speed which is present after the reduction in the predefined value for the setpoint speed has ended.

8. Method according to Claim 7, **characterized in that** a second target speed is predefined, said target speed being formed on the basis of the actual speed which is present after the reduction in the predefined value for the setpoint speed has ended by reduction by a third predefined value, and **in that** when a second predefined threshold value is exceeded by the acceleration of the vehicle the setpoint speed is set to the actual speed of the vehicle which is then present or to the second target speed depending on which of the two speeds is higher.

9. Device (1) for controlling the speed of a vehicle, having means (5) for predefining a setpoint speed, having means (10) for reducing the predefined value of the setpoint speed, having means (15) for follow-on control of an actual speed of the vehicle in the sense of approximation to the setpoint speed, the means (15) for follow-on control comprising braking means (20), **characterized in that** means (25) are provided which check whether the braking means (20) are activated after the reduction in the predefined value for the setpoint speed for the follow-on control of the actual speed has ended, **in that** means (30) are provided for reducing the setpoint speed, which means (30) form, in this case, the setpoint speed on the basis of the actual speed of the vehicle by reduction by a first predefined value.

## Revendications

1. Procédé de réglage de la vitesse d'un véhicule, selon lequel on diminue une prédéfinition d'une vitesse de consigne à laquelle on asservit la vitesse réelle du véhicule,
**caractérisé en ce qu'**
à la fin de la diminution de la prédéfinition de la vitesse de consigne, on effectue une vérification pour savoir si la vitesse réelle du véhicule est asservie à la vitesse de consigne par une intervention sur les freins, et dans ce cas on forme la vitesse de consigne en diminuant la vitesse réelle d'une première valeur prédéfinie.

2. Procédé selon la revendication 1,
**caractérisé en ce qu'**
on prédéfinit une première vitesse cible en diminuant d'une seconde valeur prédéfinie la vitesse réelle présente à la fin de la diminution de la prédéfinition de la vitesse de consigne, et en cas de dépassement d'une première valeur de seuil prédéfinie par l'accélération du véhicule, on régle la vitesse de consigne sur la vitesse réelle du véhicule ou sur la première vitesse cible, chaque fois sur la plus grande des deux vitesses.

3. Procédé selon la revendication 2,
**caractérisé en ce qu'**
on diminue une décélération de freinage tant que l'accélération du véhicule est plus petite que la première valeur de seuil prédéfinie, et on n'arrête la décélération de freinage qu'en cas de dépassement par le haut de la première valeur de seuil prédéfinie par l'accélération du véhicule.

4. Procédé selon la revendication 3,
**caractérisé en ce qu'**
on réduit progressivement la décélération de freinage.

5. Procédé selon la revendication 3 ou 4,
**caractérisé en ce qu'**
on résorbe la décélération de freinage par incréments prédéterminés.

6. Procédé selon l'une des revendications 2 à 5,
**caractérisé en ce qu'**
on choisit la première valeur prédéfinie et la deuxième valeur prédéfinie égales.

7. Procédé selon l'une des revendications précédentes,
**caractérisé en ce que**
dans le cas où la vitesse réelle du véhicule n'est pas asservie à la vitesse de consigne par l'intervention sur les freins, la vitesse de consigne est mise au même niveau que la vitesse réelle présente à la fin de la diminution de la définition de la vitesse de consigne.

8. Procédé selon la revendication 7,
**caractérisé en ce qu'**
une deuxième vitesse cible est prédéfinie en diminuant d'une troisème valeur prédéfinie la vitesse réelle présente à la fin de la diminution de la prédéfinition de la vitesse de consigne, et en cas de dépassement d'une deuxième valeur de seuil prédéfinie par l'accélération du véhicule, on régle la vitesse de consigne sur la vitesse réelle du véhicule ou sur la deuxième vitesse cible, chaque fois sur la plus grande des deux vitesses.

9. Dispositif (1) de réglage de la vitesse d'un véhicule, ayant des moyens (5) pour prédéfinir une vitesse de consigne, des moyens (10) pour diminuer la prédéfinition de la vitesse de consigne, des moyens (15) pour asservir une vitesse réelle du véhicule au sens d'un alignement sur la vitesse de consigne, les moyens (15) d'asservissement comprenant des moyens de freinage (20),
**caractérisé en ce que**
des moyens (25) vérifient si, à la fin de la diminution de la prédéfinition de la vitesse de consigne pour l'asservissement de la vitesse réelle, les moyens de freinage (20) sont activés, et dans ce cas des moyens (30) de diminution de la vitesse de consigne forment la vitesse de consigne en diminuant la vitesse réelle du véhicule, d'une première valeur prédéfinie.
